# EUROPEAN PATENT APPLICATION

(11) **EP 3 842 464 A1**
(43) Date of publication of application: **30.06.2021**
(21) Application number: 20208959.5
(22) Date of filing: 20.11.2020
(51) Int. Cl.: C08F 110/02

(54) **PREPARATION METHOD OF CATALYST FOR ETHYLENE POLYMERIZATION**

(30) Priority: 24.12.2019 KR 20190174006
(71) Applicant: Hanwha Total Petrochemical Co., Ltd., Chungcheongnam-do (KR)
(72) Inventor: LEE, Seung Yeop, Chungcheongnam-do, (KR); LEE, Jin Woo, Chungcheongnam-do (KR)
(74) Representative: Brevalex

(57) **Abstract**

Disclosed is a method for preparing a titanium solid catalyst supported on magnesium dichloride that may be used to prepare ultra-high molecular weight polyethylene having a high apparent density. Performing a polymerization reaction using a solid catalyst containing titanium tetrachloride and a phthalate compound may allow ultra-high molecular weight polyethylene having uniform particle size and high apparent density to be prepared.

## Description

### CROSS-REFERENCE TO RELATED APPLICATIONS

This application claims the benefit and priority of Korean Patent Application No. 10-2019-0174006, filed on December 24, 2019. The entire disclosure of the above application is incorporated herein by reference.

### TECHNICAL FIELD

The present disclosure relates to a magnesium-supported titanium solid catalyst and a preparation method of ultra-high molecular weight polyethylene using the same. The present disclosure relates to a method for preparing ultra-high molecular weight polyethylene with uniform particle sizes and high apparent density by preparing a solid catalyst containing titanium tetrachloride and a phthalate compound and then performing polymerization using the same.

### BACKGROUND

The ultra-high molecular weight polyethylene (UHMEP) means polyethylene with a weight average molecular weight of 250,000 to 10,000,000 g/mol. Because the molecular weight thereof is very large compared to that of general-purpose polyethylene, the ultra-high molecular weight polyethylene has excellent properties such as stiffness, abrasion resistance, chemical resistance and electrical properties. Because the ultra-high molecular weight polyethylene among thermoplastic engineering plastics has excellent mechanical properties and wear resistance, not only has the UHMEP been used for mechanical parts that require wear resistance, such as gears, bearings, and cams, the UHMEP has been also used as a material for artificial joints, especially because of excellent wear resistance, impact strength and biocompatibility thereof.

The UHMEP has a very high molecular weight and thus has little flow in a molten state and thus is produced in a powder form. Therefore, particle sizes and distribution of powders and apparent density thereof are very important. The ultra-high molecular weight polyethylene may not be subjected to a melting process and thus may be dissolved in an appropriate solvent. Powders with large particle sizes may impair dissolution properties. Further, when the apparent density is low, powder transport may be difficult. Thus, the particle size and the apparent density of the powders act as important factors affecting productivity in a production process.

Preparation of catalyst containing magnesium and titanium compound and preparation method of ultra-high molecular weight polyethylene using the same have been reported in several patents. Korean Patent No. 0822616 discloses a method for preparing a catalyst containing magnesium, titanium and silane compound which is capable of being used for preparing an ultra-high molecular weight polyolefin polymer having a uniform particle size distribution at a high catalyst activity. However, the polymer should be improved in terms of the apparent density. U.S. Patent No. 4,962,167 discloses a method for preparing a catalyst for production of ultra-high molecular weight polyethylene, the method including reacting a magnesium halide compound, a titanium alkoxide, an aluminum halide and a silicon alkoxide compound; however, the catalyst is characterized by relatively low catalyst activity and the resulting polymer has low apparent density. US Patent No. 5,587,440 discloses a method for preparing ultra-high molecular weight polyethylene having a uniform particle size distribution and high apparent density using a catalyst obtained by reacting a titanium compound with organoaluminum. However, there is a disadvantage that the polymerization activity of the catalyst is low. Therefore, a purpose of the present disclosure is to provide a preparation method of a catalyst for producing ultra-high molecular weight polyethylene (UHMEP), in which the catalyst has high polymerization activity while the resulting UHMEP has uniform particle size distribution and high apparent density as required characteristics thereof.

### SUMMARY

The present disclosure has been made in an effort to provide a preparation method of a catalyst for producing ultra-high molecular weight polyethylene (UHMEP), in which the catalyst has high polymerization activity while the resulting UHMEP has uniform particle size and high apparent density.

The method of preparing the catalyst capable of achieving the purpose is characterized by including:
(1) reacting magnesium dichloride (MgCl₂) with alcohol to prepare a magnesium compound solution;
(2) reacting titanium tetrachloride with the magnesium compound solution prepared in the step (1) to prepare a precursor; and
(3) reacting the precursor with titanium tetrachloride and at least one phthalate compound represented by a following general formula (I) to prepare the catalyst:

R₁OOC(C₆H₄)COOR₂ ...... (I)

where each of R₁ and R₂ represents an alkyl group of 1 to 10 carbon atoms.

The magnesium compound solution used in the present disclosure may be prepared by reacting the magnesium dichloride with the alcohol in presence of a hydrocarbon solvent. Types of the hydrocarbon solvent that may be used may include aliphatic hydrocarbons such as pentane, hexane, heptane, octane, decane, and kerosene, alicyclic hydrocarbons such as cyclopentane, methylcyclopentane, cyclohexane, and methylcyclohexane, aromatic hydrocarbons such as benzene, toluene, xylene, ethylbenzene, cumene, and cymene, and halogenated hydrocarbons such as dichloropropane, dichloroethylene, trichloroethylene, carbon tetrachloride, and chlorobenzene.

The alcohol used to prepare the magnesium compound solution in the step (1) is not particularly limited and may include alcohol having 4 to 20 carbons.

The polymerization reaction of the present disclosure is carried out using a magnesium-supported titanium catalyst prepared by the method and an organometallic compound of Groups II and III of the periodic table.

In the present disclosure, a beneficial organometallic compound used as a co-catalyst in the polyethylene polymerization may be represented by a general formula of MRₙ, where M is a periodic table group II or IIIA metal component such as magnesium, calcium, zinc, boron, aluminum, and gallium, R represents an alkyl group having 1 to 20 carbons such as methyl, ethyl, butyl, hexyl, octyl and decyl, and n represents a valence of the metal component. A more preferable organometallic compound may include trialkyl aluminum having an alkyl group having 1 to 6 carbons such as triethyl aluminum and triisobutyl aluminum, and a mixture thereof. In some cases, the organoaluminum compound may include ethyl aluminum dichloride, diethyl aluminum chloride, ethyl aluminum sesquichloride, and diisobutyl aluminum hydride.

The polymerization reaction may include gas phase or bulk polymerization in absence of an organic solvent or liquid slurry polymerization in presence of an organic solvent. These polymerizations are performed in absence of oxygen, water, and other compounds that may act as catalytic poisons.

Examples of the solvent may include alkanes or cycloalkanes such as pentane, hexane, heptane, n-octane, isooctane, cyclohexane, and methylcyclohexane; alkylaromatics such as toluene, xylene, ethylbenzene, isopropylbenzene, ethyltoluene, n-propylbenzene, diethylbenzene; halogenated aromatics such as chlorobenzene, chloronaphthalene and ortho-dichlorobenzene; and mixtures thereof. The examples of the solvent may be useful for removing polymerization heat and obtaining high catalyst activity.

The present disclosure provides a simple and efficient method of preparing a catalyst capable of being used for producing the ultra-high molecular weight polyethylene having the uniform particle size and high apparent density at the excellent polymerization activity.

The foregoing summary is illustrative only and is not intended to be in any way limiting. In addition to the illustrative aspects, embodiments, and features described above, further aspects, embodiments, and features will become apparent by reference to the drawings and the following detailed description.

### DETAILED DESCRIPTION

The present disclosure will be described in more detail based on following Examples. However, these Examples are for illustrative purposes only, and the present disclosure is not limited to these Examples.

### Examples

### Example 1

### [Preparation of solid catalyst for preparation of ultra-high molecular weight polyethylene]

### Step (1): Preparation of magnesium halide alcohol adduct solution

After replacing an atmosphere of a 1 L reactor equipped with a mechanical stirrer with a nitrogen atmosphere, 20 g of solid magnesium dichloride (MgCl₂), 120 ml of toluene, and 60 ml of normal butanol were added to the reactor and stirred at 350 rpm. After raising a temperature to 65°C for 1 hour, the reactor was maintained for 2 hours to obtain a uniform magnesium halide alcohol adduct solution that was well dissolved in a solvent.

### Step (2): Preparation of magnesium halide carrier

After cooling the temperature of the solution prepared in step (1) to 20°C, 20 ml of TiCl₄ was slowly injected to thereto for 40 minutes (0.5 ml/min). Then, 62.5 ml of TiCl₄ was injected thereto more rapidly for 100 minutes (0.625 ml/min). At this time, the temperature was maintained so that the temperature of the reactor did not rise 25°C or higher carefully. When the injection was completed, the temperature of the reactor was raised to 60°C for 1 hour and was maintained for 1 hour additionally. When all processes were completed, the reactor was allowed to stand and a solid component was completely settled and then a supernatant was removed, and then the solid component in the reactor was washed and precipitated once with 300 ml of toluene to completely remove liquid impurities to obtain a carrier.

### Step (3): Preparation of catalyst carrying titanium and diisobutyl phthalate

200 ml of toluene was added to the carrier, and the mixture was maintained 25°C while stirring the mixture at 250 rpm. Then, 27 ml of TiCl₄ was injected thereto at a time and the mixture was maintained for 1 hour to perform a first reaction. After injecting 36.2 mmol of diisobutyl phthalate thereto, the reactor temperature was raised to 60°C and the reactor was maintained for 1 hour to perform a second reaction between TiCl₄ and the carrier. When all processes were completed, the reactor was allowed to stand to completely settle the solid component and then a supernatant was removed. The prepared solid catalyst was washed and precipitated six times with 200 ml of hexane to remove impurities.

### [Ultra-high molecular weight polyethylene polymerization]

A nitrogen atmosphere was created in a 2 liter batch reactor by alternately injecting nitrogen and vacuum three times into the 2 liter batch reactor. After 1,000 ml of hexane was injected into the reactor, 1 mmol of triethylaluminum and 0.005 mmol of the solid catalyst based on a titanium atom were injected to the reactor. After 9 psi of hydrogen was injected thereto, a temperature of the reactor was raised to 80°C while stirring the mixture therein at 700 rpm. Then, an ethylene pressure was adjusted to 120 psig, followed by slurry polymerization for 90 minutes. After the polymerization was completed, a temperature of the reactor was lowered to room temperature. Hexane slurry containing a resulting polymer was filtered and dried to obtain a white powdery polymer.

The polymerization activity (kg-PE/g-catalyst) was calculated as a weight of the polymer as produced per an amount of the catalyst as used. The particle size distribution of the polymer was measured using a laser particle analyzer (Mastersizer X, Malvern Instruments). As a result, the average particle size thereof was D (v, 0.5), and the particle size distribution thereof was expressed as (D (v, 0.9) - D (v, 0.1)) / D (v, 0.5), where D (v, 0.5) represents the particle size exhibited by 50% of a sample, and D (v, 0.9) and D (v, 0.1) indicate the particle size exhibited by 90% and 10% of samples, respectively. The smaller the numerical value of the distribution, the narrower the distribution. The M_{w} (weight average molecular weight) and the molecular weight distribution (M_{w}/Mₙ) of the polymer were measured and analyzed using gel permeation chromatography. The polymerization results are shown in Table 1 together with the apparent density (g/ml) of the polymer.

### Example 2

Example 2 was conducted in the same manner as in Example 1, except that 36.2 mmol of dimethyl phthalate was used instead of diisobutyl phthalate in Example 1.

### Example 3

Example 3 was carried out in the same manner as in Example 1, except that 36.2 mmol of diethyl phthalate was used instead of diisobutyl phthalate in Example 1.

### Comparative Example 1

Comparative Example 1 was carried out in the same manner as in Example 1, except that 36.2 mmol of ethyl benzoate was used instead of diisobutyl phthalate in Example 1.

### Comparative Example 2

Comparative Example 2 was carried out in the same manner as in Example 1, except that diisobutyl phthalate was not used in Example 1.

### Comparative Example 3

### Step (1): Preparation of magnesium halide alcohol adduct solution

After replacing an atmosphere of a 1 L reactor equipped with a mechanical stirrer with a nitrogen atmosphere, 20 g of solid magnesium dichloride (MgCl₂), 120 ml of toluene, 20 ml of tetrahydrofuran, and 40 ml of normal butanol were added to the reactor and stirred at 350 rpm. After raising a temperature to 65°C for 1 hour, the reactor was maintained for 2 hours to obtain a uniform magnesium halide alcohol adduct solution that was well dissolved in a solvent.

### Step (2): Preparation of magnesium halide carrier

After cooling the temperature of the solution prepared in step (1) to 20°C, 20 ml of TiCl₄ was slowly injected to thereto for 40 minutes (0.5 ml/min). Then, 62.5 ml of TiCl₄ was injected thereto more rapidly for 100 minutes (0.625 ml/min). At this time, the temperature was maintained so that the temperature of the reactor did not rise 25°C or higher carefully. When the injection was completed, the temperature of the reactor was raised to 60°C for 1 hour and was maintained for 1 hour additionally. When all processes were completed, the reactor was allowed to stand and a solid component was completely settled and then a supernatant is removed, and then the solid component in the reactor was washed and precipitated once with 300 ml of toluene to completely remove liquid impurities to obtain a carrier.

### Step (3): Preparation of catalyst carrying titanium and diisobutyl phthalate

200 ml of toluene was added to the carrier, and the mixture was maintained 25°C while stirring the mixture at 250 rpm. Then, 27 ml of TiCl₄ was injected thereto at a time and the mixture was maintained for 1 hour to perform a first reaction. After injecting 36.2 mmol of diisobutyl phthalate thereto, the reactor temperature was raised to 60°C and the reactor was maintained for 1 hour to perform a second reaction between TiCl₄ and the carrier. Then, the reactor was allowed to stand to completely settle the solid component and then a supernatant was removed. The prepared solid catalyst was washed and precipitated six times with 200 ml of hexane to remove impurities.

### [Ultra-high molecular weight polyethylene polymerization]

A nitrogen atmosphere was created in a 2-liter batch reactor by alternately injecting nitrogen and vacuum three times into the 2-liter batch reactor. After 1,000 ml of hexane was injected into the reactor, 1 mmol of triethylaluminum and 0.005 mmol of the solid catalyst based on a titanium atom were injected to the reactor. After 9 psi of hydrogen was injected thereto, a temperature of the reactor was raised to 80°C while stirring the mixture therein at 700 rpm. Then, an ethylene pressure was adjusted to 120 psig, followed by slurry polymerization for 90 minutes. After the polymerization was completed, a temperature of the reactor was lowered to room temperature. Hexane slurry containing a resulting polymer was filtered and dried to obtain a white powdery polymer.

The polymerization activity (kg-PE/g-catalyst) was calculated as a weight of the polymer as produced per an amount of the catalyst as used. The particle size distribution of the polymer was measured using a laser particle analyzer (Mastersizer X, Malvern Instruments). As a result, the average particle size thereof was D (v, 0.5), and the particle size distribution thereof was expressed as (D (v, 0.9) - D (v, 0.1)) / D (v, 0.5), where D (v, 0.5) represents the particle size exhibited by 50% of a sample, and D (v, 0.9) and D (v, 0.1) indicate the particle size exhibited by 90% and 10% of samples, respectively. The smaller the numerical value of the distribution, the narrower the distribution. The M_{w} (weight average molecular weight) and the molecular weight distribution (M_{w}/Mₙ) of the polymer were measured and analyzed using gel permeation chromatography. The polymerization results are shown in Table 1 together with the apparent density (g/ml) of the polymer.

**[Table 1]**

| **Examples** | **Titanium content in catalyst (weight %)** | **Activity** (kg-PE/g-**catalyst)** | **Apparent density** (g/ml) | **Molecular weight** (10⁶g/mol) | **Average particle size** (µm) | **Particle size distribution** |
|---|---|---|---|---|---|---|
| **Example** 1 | 2.8 | 28.5 | 0.45 | 5.6 | 131 | 0.60 |
| **Example** 2 | 2.3 | 24.3 | 0.43 | 5.8 | 125 | 0.74 |
| **Example** 3 | 2.6 | 26.2 | 0.43 | 5.6 | 127 | 0.76 |
| **Comparative Example** 1 | 3.6 | 15.7 | 0.39 | 5.5 | 112 | 0.70 |
| **Comparative Example** 2 | 7.5 | 10.8 | 0.33 | 5.3 | 240 | 1.3 |
| **Comparative Example** 3 | 2.9 | 19.4 | 0.37 | 6.2 | 193 | 1.1 |

As shown in Table 1, the catalyst prepared by the methods of Examples 1 to 3 may allow production of the ultra-high molecular weight polyethylene with uniform particle size and very high apparent density at excellent polymerization activity.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A preparation method of a catalyst for producing ultra-high molecular weight polyethylene, the method comprising:
(1) reacting magnesium dichloride (MgCl₂) with alcohol to prepare a magnesium compound solution;
(2) reacting titanium tetrachloride with the magnesium compound solution prepared in the step (1) to prepare a precursor; and
(3) reacting the precursor with titanium tetrachloride and phthalate compound to prepare the catalyst.

2. The method of claim 1, wherein the alcohol is an alcohol having 4 to 20 carbon atoms.

3. The method of claim 1, wherein the phthalate compound includes at least one phthalate compound represented by a following general formula (I)
R₁OOC(C₆H₄)COOR₂ (I)
where each of R₁ and R₂ represents an alkyl group of 1 to 10 carbon atoms.
